# EUROPÄISCHE PATENTSCHRIFT

(11) **EP 4 568 856 B1**
(45) Veröffentlichungstag und Bekanntmachung des Hinweises auf die Patenterteilung: **30.09.2026**
(21) Anmeldenummer: 24745422.6
(22) Anmeldetag: 16.07.2024
(51) Int. Cl.: G07B 15/06, B60K 35/21, B60Q 3/80, B60Q 9/00, G08G 1/0967

(54) **SYSTEM ZUR VISUALISIERUNG VON MAUTBEZAHLVORGÄNGEN**
SYSTEM FOR VISUALIZING TOLL PAYMENT PROCESSES
SYSTÈME POUR VISUALISER DES PROCESSUS DE PAIEMENT DE PÉAGE

(30) Priorität: 29.07.2023 DE 102023003143
(43) Veröffentlichungstag der Anmeldung: 18.06.2025
(73) Patentinhaber: Mercedes-Benz Group AG, 70372 Stuttgart (DE)
(72) Erfinder: ECHARD, Jörg, 71065 Sindelfingen (DE); KEPPLER, Martin, 75394 Oberreichenbach (DE)
(74) Vertreter: Novagraaf Group
(86) Internationale Anmeldenummer: PCT/EP2024/070194
(87) Internationale Veröffentlichungsnummer: WO 2025/026733

(56) Entgegenhaltungen:
- US-A- 5 310 999
- US-B2- 11 568 403

## Beschreibung

Die Erfindung betrifft ein System zur Visualisierung von Mautbezahlvorgängen in einem Fahrzeug.

Fahrzeuge weisen eine Innenraumbeleuchtung auf. Teile der Innenraumbeleuchtung, welche beispielsweise abschnittsweise farbvariabel und/oder helligkeitsvariabel ausgebildet sind, können als sogenannte Stimmungsbeleuchtung bzw. Ambientebeleuchtung bezeichnet werden. Über eine derartige Stimmungsbeleuchtung kann eine Farbgestaltung bzw. eine Lichtgestaltung des Innenraums abhängig von Wünschen des Nutzers bzw. abhängig vom Fahrprogramm ausgestaltet werden. Des Weiteren kann beispielsweise eine Visualisierung bzw. Quittierung von Bedienvorgängen, wie einer Klimabedienung, erfolgen. Weiterhin können im Bereich des automatisierten Fahrens beispielsweise Übergänge vom manuellen Verfahren zum automatisierten Fahren angezeigt werden.

Die DE 10 2016 005 460 A1 beschreibt eine Ambientebeleuchtung eines Fahrzeugs, wobei diese in Abhängigkeit von Parametern einer Klimaanlage die Farbe und/oder die Helligkeit verändern kann.

Weiterhin ist aus dem Stand der Technik ein im Fahrzeug integriertes Mautbezahlsystem bekannt, das bei einer Nutzung von insbesondere mautpflichtigen Straßen mit der Straßeninfrastruktur kommunizieren kann. Dadurch kann ein Mautbezahlvorgang ausgelöst bzw. abgewickelt werden.

Aus der DE 10 2021 001 674 A1 ist eine Möglichkeit bekannt, mautrelevante Informationen auf einem Fahrzeugdisplay anzuzeigen.

Weiterhin kann auf die US 11 568 403 B2 und US 5 310 999 A verwiesen werden, welche die Ausgabe eines Mautstatus auf einem Toll-Transponder zeigen.

Die Straßeninfrastruktur einer mautpflichtigen Straße kann beispielsweise als Mautbrücke oder Mauttor ausgebildet sein. Durch entsprechende Beschilderung kann dies für den Fahrer des Fahrzeugs erkennbar wahrgenommen werden. Tritt ein Fehler bei dem Bezahlvorgang der Maut auf, so sollte der Fahrer des Fahrzeugs bei der Durchfahrt darüber informiert werden, um ihm die Möglichkeit der Fehlerbehebung zu geben. Ein Fehler kann beispielsweise durch eine abgelaufene Zahlkarte oder durch das Fehlen einer Bezahlkarte ausgelöst werden.

Bei bekannten Systemen erfolgt eine derartige Fehleranzeige durch ein akustisches Signal, wie beispielsweise eine akustische Ansage durch Sprache und/oder Töne. Des Weiteren können Overlays auf dem Display im Fahrzeug angezeigt werden.

Nachteilig sind Sprachansagen insbesondere dann störend, wenn sonstige aktive Audiosignale unterbrochen bzw. mit den Sprachsignalen überlagert werden. Es kann so zu einem gewissen "Nerv-Effekt" kommen, wenn Sprachansagen in der Regel immer bestätigen, dass ein System funktioniert hat. Dasselbe gilt ebenso für Hinweistöne, die fortwährend wiederkehren.

Die Aufgabe der vorliegenden Erfindung besteht nun darin, ein System zur Visualisierung von Mautbezahlvorgängen anzugeben, welches die vorgenannten Nachteile überwindet.

Erfindungsgemäß wird diese Aufgabe durch ein System zur Visualisierung von Mautbezahlvorgängen mit den Merkmalen im Anspruch 1, und hier insbesondere im kennzeichnenden Teil des Anspruchs 1 gelöst. Vorteilhafte Ausgestaltungen und Weiterbildungen ergeben sich aus den hiervon abhängigen Unteransprüchen.

Im Kern des erfindungsgemäßen Systems sendet das Mautbezahlsystem Statusinformationen über zumindest einen Bezahlvorgang an die Innenraumbeleuchtung, wobei die Statusinformationen Informationen über die Mautbezahlfunktion umfassen, welche zumindest die Mautbezahlfunktion als betriebsbereit oder nicht betriebsbereit, einen Bezahlvorgang als fehlerhaft oder nicht fehlerhaft und/oder einen bezahlten Mautbetrag beinhalten, wobei die Innenraumbeleuchtung in der Helligkeit und/oder im Farbton entsprechend der Statusinformationen angepasst wird, und wobei es sich bei der Innenraumbeleuchtung um eine Ambientebeleuchtung handelt, die im Fahrzeug fest verbaut ist. Nutzerinformationen zu Bezahlvorgängen von Mautbezahlsystemen können daher auf intuitive, offensichtliche und nicht unterbrechende Art und Weise über die Innenraumbeleuchtung im Fahrzeug an die Insassen des Fahrzeugs übermittelt werden.

Das System ist zur Visualisierung von Mautbezahlvorgängen in einem Fahrzeug ausgebildet und umfasst ein im Fahrzeug integriertes Mautbezahlsystem und eine Innenraumbeleuchtung des Fahrzeugs. Das Mautbezahlsystem ist insbesondere in der Lage, Statusinformationen über eine Fahrzeugkommunikationseinrichtung, wie insbesondere einen Datenbus, im Fahrzeug bereitzustellen. Die Statusinformationen können folgende Zustände umfassen, wobei eine Mautbezahlfunktion als generell betriebsbereit und eingerichtet hinterlegt sein kann. Des Weiteren kann die Statusinformation angegeben werden, dass die Mautbezahlfunktion nicht betriebsbereit ist. Eine Statusinformation kann ebenso heißen, dass bei einer Durchfahrt durch eine Mautbezahleinrichtung der Bezahlvorgang fehlerfrei abgewickelt wurde. Ebenso kann die Statusinformation hinterlegt sein, dass nach einer Durchfahrt durch die Mautbezahleinrichtung der Bezahlvorgang nicht fehlerfrei abgewickelt wurde. Die Statusinformation kann ebenso den bezahlten Mautbetrag enthalten. Des Weiteren kann die für den Mautbetrag zugrunde liegende Personenzahl in der Statusinformation enthalten sein.

Das System stellt demnach eine intuitive Visualisierung der Zustände des Mautbezahlsystems bereit, wobei keine Audiounterbrechung von anderen Audiosignalen, wie beispielsweise Radio oder einem Telefonat, erfolgt. Es kann demnach eine Sichtbarkeit einer Visualisierung bereitgestellt werden, ohne den Fahrer abzulenken. Des Weiteren werden allgemein die angezeigten Informationen über die Zustände des Mautbezahlsystems verbessert, da diese individualisiert angezeigt werden können.

Da es sich bei der Innenraumbeleuchtung im eine Ambientebeleuchtung handelt, kann die bereits am Fahrzeug verbaut Beleuchtung genutzt werden. Des Weiteren ist die Ambientebeleuchtung im Bereich des Armaturenbretts angeordnet, und daher für den Fahrer sichtbar.

Bevorzugt können die Statusinformationen über eine Fahrzeugkommunikationsvorrichtung direkt an die Innenraumbeleuchtung gesendet werden oder von der Fahrzeugkommunikationsvorrichtung an eine zentrale Rechnereinheit gesendet und von dort an die Innenraumbeleuchtung übermittelt werden. Bei der zentralen Recheneinheit kann es sich insbesondere um eine Headunit handeln. In beiden Fällen kann die Innenraumbeleuchtungseinrichtung oder die zentrale Rechnereinheit neben den Statusinformationen des Mautbezahlsystems auch weitere Statusinformationen andere Systeme empfangen, verarbeiten, koordinieren, kombinieren und/oder gegeneinander Priorisierung.

Gemäß einer sehr vorteilhaften Weiterbildung der Idee kann es dabei vorgesehen sein, dass zeitlich temporäre Innenraumlichtveränderungen der Innenraumbeleuchtung im zeitlichen Zusammenhang mit einer Durchfahrt durch eine Mautbezahleinrichtung umgesetzt werden. Dabei kann beispielsweise ein Erfolg eines Bezahlvorgang des visualisiert werden. Des Weiteren können ein nicht erfolgter Bezahlvorgang, sowie die Gründe des fehlerhaften Vorgehens, angezeigt bzw. visualisiert werden. Es kann beispielsweise durch eine farbliche Innenraumbeleuchtung bzw. eine unterschiedliche Helligkeit der Innenraumbeleuchtung eine beliebige Statusinformation visualisiert werden. So kann eine grüne Innenraumbeleuchtung bzw. ein grünes Aufleuchten für einen erfolgreichen Bezahlvorgang stehen. Des Weiteren kann beispielsweise eine rote Beleuchtung bzw. ein rotes Aufleuchten auf einen nicht erfolgten Bezahlvorgang hinweisen.

Dabei kann es gemäß einer vorteilhaften Ausgestaltung vorgesehen sein, dass durch im Innenraum des Fahrzeugs räumlich fest definierte oder räumlich veränderliche Innenraumlichtveränderungen der Innenraumbeleuchtung ein Zusammenhang mit dem Mautbezahlvorgang hergestellt wird wobei es sich bei den Innenraumlichtveränderungen um ein Aufleuchten einer gewissen Lichtfarbe und/oder eine räumliche Veränderung der Innenraumbeleuchtung handelt. So kann beispielsweise durch einen gewissen Ort im Fahrzeug, an welchem eine Lichtveränderung der Visualisierung stattfindet, ein visueller Zusammenhang zwischen der Lichtveränderung und dem Mautsystem dargestellt werden. Dies kann beispielsweise eine ausgehend vom Mauttransponder breiter werdende Signalisierung sein. Ebenso können die unterschiedlichen Visualisierungsmöglichkeiten kombiniert werden, beispielsweise als rotes Dauerlicht, aufleuchtendes rotes Licht oder als Aufleuchten einer anderen Farbe. So kann beispielsweise eine Durchfahrt durch ein Toll Gate visualisiert werden.

Eine weitere vorteilhafte Ausgestaltung kann es vorsehen, dass aus der veränderlichen Innenraumlichtveränderungen der Innenraumbeleuchtung der Zahlbetrag hervorgeht. Dies kann beispielsweise durch eine Anzahl von Farbwechseln visualisiert werden. Alternativ oder zusätzlich kann durch eine gewisse Intensität bzw. Helligkeit eines Lichtsignals auf einen Zahlbetrag hingewiesen werden.

Gemäß einer sehr vorteilhaften Weiterbildung der Idee kann es dabei vorgesehen sein, dass aus der veränderlichen Innenraumlichtveränderungen der Innenraumbeleuchtung eine Anzahl und/oder Sitzpositionen der für den Mautbezahlvorgang herangezogenen Insassen hervorgeht. So kann beispielsweise eine optische Hervorhebung eine Umgebung der Sitze, auf welchen sich Personen befinden, erfolgen, um die berücksichtigten Sitzpositionen anzuzeigen.

Eine weitere vorteilhafte Ausgestaltung kann es vorsehen, dass die Innenraumbeleuchtung die Statusinformationen in aggregierter, koordinierter, kombinierter und /oder priorisierter Art und Weise visualisiert. Dies wird durch zeitlich temporäre Innenraumlichtveränderungen im zeitlichen Zusammenhang mit einer Durchfahrt durch eine Mautbezahleinrichtung umgesetzt.

Weitere vorteilhafte Ausgestaltungen des erfindungsgemäßen Systems ergeben sich auch aus dem Ausführungsbeispiel, welches nachfolgend unter Bezugnahme auf die Figur näher dargestellt ist.

Dabei zeigen:

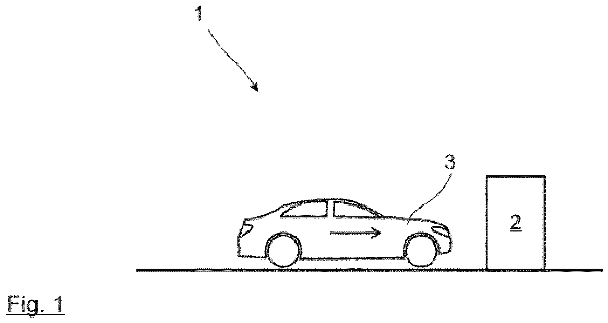

- Fig. 1: eine schematische Darstellung des Systems.

In der Darstellung der Fig. 1 ist eine mögliche Ausführungsform des Systems 1 gezeigt. Das System 1 wird insbesondere aktiviert, wenn ein Fahrzeug 3 eine Mautstation 2 passiert, bzw. sich der Mautstation 2 annähert. Das System 1 ist zur Visualisierung von Mautbezahlvorgängen in dem Fahrzeug 3 ausgebildet und umfasst ein im Fahrzeug 3 integriertes Mautbezahlsystem und eine Innenraumbeleuchtung des Fahrzeugs 3.

Das Mautbezahlsystem sendet Statusinformationen über zumindest einen Bezahlvorgang an die Innenraumbeleuchtung, wobei die Innenraumbeleuchtung in der Helligkeit und/oder im Farbton entsprechend der Statusinformationen angepasst wird. Dadurch kann eine intuitive Visualisierung der Zustände des Mautbezahlsystems bereitgestellt werden, welche keine Audiounterbrechung anderer Audiosignale im Fahrzeug auslöst. Ein derartiges System 1 mit derartiger Visualisierung wird daher angenehm von den Insassen des Fahrzeugs 3 wahrgenommen.

## Patentansprüche

1. System (1) zur Visualisierung von Mautbezahlvorgängen in einem Fahrzeug (3), umfassend ein im Fahrzeug (3) integriertes Mautbezahlsystem und eine Innenraumbeleuchtung des Fahrzeugs,
**dadurch gekennzeichnet, dass**
das Mautbezahlsystem Statusinformationen über zumindest einen Bezahlvorgang an die Innenraumbeleuchtung sendet, wobei die Statusinformationen Informationen über die Mautbezahlfunktion umfassen, welche zumindest die Mautbezahlfunktion als betriebsbereit oder nicht betriebsbereit, einen Bezahlvorgang als fehlerhaft oder nicht fehlerhaft und/oder einen bezahlten Mautbetrag beinhalten, wobei die Innenraumbeleuchtung in der Helligkeit und/oder im Farbton entsprechend der Statusinformationen angepasst wird, und wobei es sich bei der Innenraumbeleuchtung um eine Ambientebeleuchtung handelt, die im Fahrzeug fest verbaut ist.

2. System (1) nach Anspruch 1,
**dadurch gekennzeichnet, dass**
die Statusinformationen über eine Fahrzeugkommunikationsvorrichtung direkt an die Innenraumbeleuchtung gesendet werden oder von der Fahrzeugkommunikationsvorrichtung an eine zentrale Rechnereinheit gesendet und von dort an die Innenraumbeleuchtung übermittelt werden.

3. System (1) nach Anspruch 1 oder 2,
**dadurch gekennzeichnet, dass**
zeitlich temporäre Innenraumlichtveränderungen der Innenraumbeleuchtung im zeitlichen Zusammenhang mit einer Durchfahrt durch eine Mautbezahleinrichtung umgesetzt werden.

4. System (1) nach Anspruch 1, 2 oder 3,
**dadurch gekennzeichnet, dass**
durch im Innenraum des Fahrzeugs (3) räumlich fest definierte oder räumlich veränderliche Innenraumlichtveränderungen der Innenraumbeleuchtung ein Zusammenhang mit dem Mautbezahlvorgang hergestellt wird, wobei es sich bei den Innenraumlichtveränderungen um ein Aufleuchten einer gewissen Lichtfarbe und/oder eine räumliche Veränderung der Innenraumbeleuchtung handelt.

5. System (1) nach einem der Ansprüche 3 bis 4,
**dadurch gekennzeichnet, dass**
aus der veränderlichen Innenraumlichtveränderungen der Innenraumbeleuchtung der Zahlbetrag hervorgeht.

6. System (1) nach einem der Ansprüche 3 bis 5,
**dadurch gekennzeichnet, dass**
aus der veränderlichen Innenraumlichtveränderungen der Innenraumbeleuchtung eine Anzahl und/oder Sitzpositionen der für den Mautbezahlvorgang herangezogenen Insassen hervorgeht.

7. System (1) nach einem der Ansprüche 3 bis 6,
**dadurch gekennzeichnet, dass**
die Innenraumbeleuchtung die Statusinformationen in aggregierter, koordinierter, kombinierter und /oder priorisierter Art und Weise visualisiert, wobei dies durch zeitlich temporäre Innenraumlichtveränderungen im zeitlichen Zusammenhang mit einer Durchfahrt durch eine Mautbezahleinrichtung erfolgt.

## Claims

1. System (1) for visualizing toll payment processes in a vehicle (3), comprising a toll payment system integrated in the vehicle (3) and interior lighting of the vehicle,
**characterized in that**
the toll payment system sends status information about at least one payment process to the interior lighting, wherein the status information comprises information about the toll payment function, which toll payment function information contains at least the toll payment function being operational or not operational, a payment process being faulty or not faulty, and/or a paid toll amount, wherein the brightness and/or color tone of the interior lighting is adapted according to the status information, and wherein the interior lighting is ambient lighting which is permanently installed in the vehicle.

2. System (1) according to claim 1,
**characterized in that**
the status information is sent directly to the interior lighting via a vehicle communication device or is sent from the vehicle communication device to a central computer unit and from there is transmitted to the interior lighting.

3. System (1) according to claim 1 or 2,
**characterized in that**
temporary interior light changes of the interior lighting are implemented in temporal connection with driving through a toll payment apparatus.

4. System (1) according to claim 1, 2 or 3,
**characterized in that**
a connection with the toll payment process is established by spatially fixedly defined or spatially variable interior light changes of the interior lighting in the interior lighting of the vehicle (3), wherein the interior light changes are a certain color of light flashing and/or a spatial change of the interior lighting.

5. System (1) according to any of claims 3 to 4,
**characterized in that**
the variable interior light changes of the interior lighting show the payment amount.

6. System (1) according to any of claims 3 to 5,
**characterized in that**
the variable interior light changes of the interior lighting show a number and/or seating positions of the passengers who are taken into account for the toll payment process.

7. System (1) according to any of claims 3 to 6,
**characterized in that**
the interior lighting visualizes the status information in an aggregated, coordinated, combined and/or prioritized manner, wherein this information is visualized in such a manner through temporary interior light changes in temporal connection with driving through a toll payment apparatus.

## Revendications

1. Système (1) permettant de visualiser des processus de paiement de péage dans un véhicule (3), comprenant un système de paiement de péage intégré au véhicule (3) et un éclairage d'habitacle du véhicule,
**caractérisé en ce que**
le système de paiement de péage envoie à l'éclairage d'habitacle des informations d'état concernant au moins un processus de paiement, dans lequel les informations d'état comprennent des informations concernant la fonction de paiement de péage, lesquelles contiennent au moins la fonction de paiement de péage comme opérationnelle ou non, un processus de paiement comme erroné ou non et/ou un montant de péage payé, dans lequel l'éclairage d'habitacle est adapté en termes de luminosité et/ou de teinte de manière à correspondre aux informations d'état, et dans lequel l'éclairage d'habitacle est un éclairage d'ambiance monté à demeure dans le véhicule.

2. Système (1) selon la revendication 1,
**caractérisé en ce que**
les informations d'état sont envoyées directement à l'éclairage d'habitacle par l'intermédiaire d'un dispositif de communication de véhicule, ou bien elles sont envoyées à une unité centrale de traitement par le dispositif de communication de véhicule, puis transmises de là à l'éclairage d'habitacle.

3. Système (1) selon la revendication 1 ou 2,
**caractérisé en ce que**
des variations temporelles temporaires d'éclairage d'habitacle de l'éclairage d'habitacle sont mises en œuvre en relation temporelle avec un passage à travers un poste de péage.

4. Système (1) selon la revendication 1, 2 ou 3,
**caractérisé en ce que**
une relation est établie avec le processus de paiement de péage grâce à des variations d'éclairage d'habitacle de l'éclairage d'habitacle variables dans l'espace ou définies de manière fixe dans l'espace dans l'habitacle du véhicule (3), dans lequel les variations d'éclairage d'habitacle consistent en un allumage d'une certaine couleur de lumière et/ou en une modification dans l'espace de l'éclairage d'habitacle.

5. Système (1) selon l'une des revendications 3 à 4,
**caractérisé en ce que**
le montant à payer ressort des variations d'éclairage d'habitacle variables de l'éclairage d'habitacle.

6. Système (1) selon l'une des revendications 3 à 5,
**caractérisé en ce que**
un nombre et/ou des positions d'assise des passagers pris en compte pour le processus de paiement de péage ressortent des variations d'éclairage d'habitacle variables de l'éclairage d'habitacle.

7. Système (1) selon l'une des revendications 3 à 6,
**caractérisé en ce que**
l'éclairage d'habitacle permet de visualiser les informations d'état de manière agrégée, coordonnée, combinée et/ou hiérarchisée, dans lequel cela est réalisé grâce à des variations temporelles temporaires d'éclairage d'habitacle en relation temporelle avec un passage à travers un poste de péage.
